# EUROPÄISCHE PATENTSCHRIFT

(11) **EP 2 641 790 B1**
(45) Veröffentlichungstag und Bekanntmachung des Hinweises auf die Patenterteilung: **30.10.2019**
(21) Anmeldenummer: 13000155.5
(22) Anmeldetag: 12.01.2013
(51) Int. Cl.: B60T 8/17, B60T 8/24, B62D 15/02

(54) **Bremssystem zur Steuerung des Rückwärtsrangierens eines Gespannfahrzeugs**
Brake system for controlling the reverse movement a trailer vehicle
Système de freinage pour commander la man'uvre en marche arrière d'un véhicule d'attelage

(30) Priorität: 22.03.2012 DE 102012005832
(43) Veröffentlichungstag der Anmeldung: 25.09.2013
(73) Patentinhaber: WABCO GmbH, 30453 Hannover (DE)
(72) Erfinder: Deike, Horst, 31249 Hohenhameln (DE); Dieckmann, Thomas, 30982 Pattensen (DE); Henken, Immanuel, 31867 Lauenau (DE); Klein, Bodo, 30890 Barsinghausen (DE); Michaelsen, Arne, 30926 Seelze (DE); Stender, Axel, 31787 Hameln (DE); Wiehen, Christian, Dr., 30938 Burgwedel (DE); Zielke, Frank, 30890 Barsinghausen (DE)

(56) Entgegenhaltungen:
- EP-A1- 1 571 058
- DE-A1- 10 101 342
- DE-A1-102007 018 445
- DE-U1-202005 020 065

## Beschreibung

Die Erfindung betrifft ein Bremssystem zur Steuerung des Rückwärtsrangierens eines Gespannfahrzeugs.

Aus der US 2007/0 228 814 A1 ist ein Lenksystem für das Rückwärtsrangieren eines Gespannfahrzeugs bekannt, wobei das Gespannfahrzeug ein Zugfahrzeug und einen Einachshänger aufweist, und bei dem der Einachshänger mit dem Zugfahrzeug über eine am Zugfahrzeug gelenkig angekuppelte Deichsel des Anhängers verbunden ist. Das Gespannfahrzeug weist Bremsen an den jeweiligen Fahrzeugrädern auf, die mittels einer Steuerungsvorrichtung pneumatisch, hydraulisch oder elektromotorisch betätigbar sind, und bei dem Bremsen des Anhängers unabhängig von den Bremsen des Zugfahrzeugs hinsichtlich ihrer Bremsbetätigung mittels einer Betätigungsvorrichtung in Bezug auf die Längsachse des Anhängers seitengetrennt ansteuerbar sind. In dieser Druckschrift sind die Schwierigkeiten beim Rückwärtsrangieren eines solchen Gespannfahrzeugs ausführlich beschrieben, und es wird dort vorgeschlagen, diese Schwierigkeiten dadurch zu vermeiden, dass die Bremsen einer jeden Seite des Einachsanhängers mittels einer Betätigungsvorrichtung wahlweise betätigbar sind, um den Anhänger um das abgebremste Rad schwenken zu lassen und um dadurch in eine vorgegebene Richtung zu fahren. Bei einer Vorwärtsfahrt ist das Bremssystem des Anhängers mit dem Bremssystem des Zugfahrzeugs gekoppelt, so dass beim Abbremsen des Zugfahrzeugs die beiden Räder des Anhängers ebenfalls abgebremst werden. Um beim Rückwärtsrangieren des Gespannfahrzeugs eine autonome Lenkung des Anhängers durch ein Abbremsen des jeweils kurveninneren Rades zu erreichen, wird das Bremssystem des Anhängers beim Einlegen des Rückwärtsgangs vom Bremssystem des Zugfahrzeugs getrennt, und die Bremsen der Räder der einen Seite oder der anderen Seite des Anhängers lassen sich mittels der Betätigungsvorrichtung in der gewünschten Weise abbremsen. Die Betätigung der Anhängerbremsen kann elektrisch, hydraulisch oder pneumatisch erfolgen, und die Betätigungsvorrichtung kann im Bereich des Fahrers des Zugfahrzeugs oder außerhalb des Zugfahrzeugs zur Betätigung durch eine zweite Person angeordnet sein.

Ein automatisches Lenksystem und Lenkverfahren für das Rückwärtsrangieren eines Gespannfahrzeugs sind in der DE 199 53 413 A1 beschrieben. In diesem Fall wird eine Rückwärtsfahrt des Gespannfahrzeugs mittels geeigneter Sensoren oder durch die Auswertung vorhandener Steuersignale erfasst, und es wird abhängig davon die Bremse des einachsigen Anhängers auf derjenigen Seite betätigt, in deren Richtung sich der einachsige Anhänger bewegen soll. Die Betätigung der Bremsen des einachsigen Anhängers wird über ein im Gespannfahrzeug, beispielsweise im Anhänger, implementiertes Steuerungsgerät vorgenommen, das ein bestimmtes Steuerungssignal generiert, mit dem der Bremsdruck in den Bremszylindern der Bremsen des einachsigen Anhängers angesteuert wird. Zur Erzeugung des Steuerungssignals werden dem Steuerungsgerät die von den Sensoren des Gespannfahrzeugs gelieferten Sensorsignale bezüglich des Lenkwinkels und des tatsächlichen Winkels des einachsigen Anhängers und/oder bezüglich der Geschwindigkeit des Zugfahrzeugs und/oder bezüglich der Drehbewegung um mindestens eine der Achsen des Zugfahrzeugs und/oder um die Achse des einachsigen Anhängers zugeführt, die dann vom Steuerungsgerät entsprechend verarbeitet bzw. ausgewertet werden, so dass sich der einachsige Anhänger automatisch in die gewünschte Richtung bewegt.

Der DE 100 19 817 A1 ist ein Gespannfahrzeug bestehend aus einem Sattelschlepper und einem Sattelauflieger entnehmbar. Der Sattelauflieger ist mit ungelenkten Tandemachsen versehen, deren Räder sich kurveninnen oder kurvenaußen abbremsen lassen, um bei einer Rückwärtsfahrt Über- und Untersteuerungstendenzen entgegenzuwirken und um eine verbesserte Spurhaltung zu erreichen. Hierzu ist eine erste Winkelmesseinrichtung, die Signale bezüglich des jeweiligen Lenkwinkels zwischen der Geradeausfahrtrichtung des Gespannfahrzeugs und dem Lenkeinschlag der lenkbaren Räder des Sattelschleppers oder dem Lenkeinschlag des Lenkrades der Lenkeinrichtung abgibt. Außerdem ist eine zweite Winkelmesseinrichtung vorhanden, die Signale bezüglich des sich bei Kurvenfahrten einstellenden Anhängerwinkels zwischen der theoretischen Geradeausfahrtrichtung des Zugfahrzeugs und der theoretischen Geradeausfahrtrichtung des Anhängers abgibt. Des Weiteren ist eine Steuerungseinrichtung vorgesehen, welche die Signale der ersten und/oder zweiten Winkelmesseinrichtung auswertet, und welche die Bremseinrichtung in Abhängigkeit von dieser Auswertung derart mit Steuerungssignalen beaufschlagt, dass bei einem Anhängerwinkel, der größer ist als der Lenkwinkel, das heißt, wenn ein übersteuertes Fahrverhalten vorliegt, wenigstens ein auf der Kurvenaußenseite vorhandenes Rad des Anhängers abgebremst wird, oder wenn bei einem Anhängerwinkel, der kleiner ist als der Lenkwinkel und somit ein untersteuertes Fahrverhalten vorliegt, wenigstens ein auf der Kurveninnenseite vorhandenes Rad des Anhängers abgebremst wird. Die Steuerungseinrichtung wird nur bei einer Rückwärtsfahrt des Gespannfahrzeugs aktiviert.

DE 10 2007 018 445 A1 offenbart ein Fahrzeug mit einer Dollyeinheit, die einen ersten Rahmen und wenigstens zwei gegenüber dem ersten Rahmen lenkbare Räder aufweist, wobei eine Bremseinrichtung vorgesehen ist, die die auf die Räder der Dollyeinheit wirkende Bremskraft für jede Seite des Fahrzeugs in Abhängigkeit von einer geplanten Fahrrichtungsänderung separat steuert.

Das Fahrverhalten eines Gespannfahrzeugs bestehend aus einem Sattelschlepper und einem Sattelauflieger ist prinzipiell vergleichbar mit dem Fahrverhalten eines Gespannfahrzeugs bestehend aus einem Zugfahrzeug und einem Einachs- bzw. Tandemachsanhänger, so dass der vorstehend referierte Stand der Technik in dieser Hinsicht übereinstimmt und nur hinsichtlich der Ansteuerung der Bremsen differiert.

Vor diesem Hintergrund liegt der Erfindung die Aufgabe zugrunde, Mittel zur Steuerung des Rückwärtsrangieren eines anderen Gespannfahrzeugtyps vorzustellen, bei dem der Anhänger über eine mittels einer Deichsel lenkbare Vorderachse sowie über mindestens eine ungelenkte Hinterachse verfügt.

Gelöst wird diese Aufgabe durch ein Bremssystem mit den Merkmalen des Hauptanspruchs, während die Unteransprüche bevorzugte Ausführungsformen definieren.

Demnach betrifft die Erfindung ein Bremssystem für einen Anhänger eines Gespannfahrzeugs, der über eine mittels einer Deichsel lenkbare Vorderachse sowie über mindestens eine ungelenkte Hinterachse verfügt. Gemäß der Erfindung weist das Bremssystem ein Steuergerät auf, welches dazu eingerichtet ist, entsprechend einer von anhängerextern angeforderten Richtungsvorgabe die Bremse wenigstens eines Rades einer Seite wenigstens einer Achse des Anhängers so abzubremsen, dass der Anhänger bei einem Bewegen desselben in die gewünschte Rangierrichtung bewegt wird.

Ein Gespannfahrzeug gemäß der Erfindung weist ein Zugfahrzeug und einen Anhänger auf. Ein Zugfahrzeug des Gespannfahrzeugs kann ein Personenfahrzeug, ein Kleintransporter oder ein Lastkraftwagen sein. Ein Anhänger des Gespannfahrzeugs weist im Zusammenhang mit der Erfindung grundsätzlich wenigstens zwei Achsen auf, wovon eine Achse mittels einer mit dem Zugfahrzeug gelenkig gekoppelten Deichsel lenkbar ist. Das Bremssystem für das Gespannfahrzeug weist Radbremsen am Zugfahrzeug und Radbremsen am Anhänger auf, wobei die Betätigung der Radbremsen am Anhänger bei einer Vorwärtsfahrt vom Zugfahrzeug aus gesteuert wird. Sowohl das Zugfahrzeug als auch der Anhänger sind mit Bremsen an jedem Fahrzeugrad versehen.

Das Steuergerät, welches bei einem Rangieren die Betätigung der Bremsen des Anhängers steuert, ist bevorzugt dazu eingerichtet, wenigstens die Bremse eines Rades der wenigstens einen gelenkten Vorderachse und/oder die Bremse wenigstens eines Rades der wenigstens einen ungelenkten Hinterachse zu betätigen, um das Anhängerheck bei einer Rückwärtsfahrt in eine vorbestimmte Richtung zu steuern.

Zum Ansteuern der Radbremsen kann das Steuergerät mit einer Steuerungselektronik in dem Zugfahrzeug des Gespannfahrzeugs funktional verbunden sein, wobei diese Steuerungselektronik dazu eingerichtet ist, je nach Fahraufgabe und Bedarf eine adäquate Abbremsstrategie auszuwählen und die Abbremsung einzelner Räder an der wenigstens einen gelenkten Vorderachse und/oder einzelner Räder an wenigstens einer ungelenkten Hinterachse zu steuern.

Besonders einfach lässt sich die genannte Steuerungselektronik realisieren, wenn das Gespannfahrzeug ein elektronisches Radschlupfregelsystem aufweist, so dass sich die mit dem Steuergerät funktional verbundene Steuerungselektronik in dieses Radschlupfregelsystem hardwarebezogen integrieren und/oder softwarebezogen implementieren lässt und nur beim Rückwärtsrangieren des Gespannfahrzeugs aktivierbar ist.

Ergänzend zum Lenken durch Einzelradbremsung zumindest einen Rades des Anhängers kann die wenigstens eine gelenkte Vorderachse einen durch das Steuergerät steuerbaren Antrieb für einen Lenkmechanismus umfassen. Besonders bevorzugt ist diejenige Ausführungsform des Lenkmechanismus der Vorderachse des Anhängers, bei der dieser als Drehschemel ausgebildet ist, da eine drehschemelgelagerte lenkbare Vorderachse beim Abbremsen nur eines Rades aufgrund der Geometrie der Verbindung mit dem Zugfahrzeug zum Ausschwenken nur geringe Bremskräfte erfordert.

Die genannte Steuerungselektronik kann zusätzlich dazu eingerichtet sein, das Rückwärtsrangieren mit einem gestreckten Gespannfahrzeug automatisch durchzuführen, indem die entsprechenden Bremsen der Räder der Vorderachse und/oder der Hinterachse des Anhängers so zur Bremsbetätigung angesteuert werden, dass der Anhänger bei einem Ausweichen aus der gestreckten Stellung in diese gestreckte Stellung zurückgeführt wird. Eine gestreckte Stellung des Gespannfahrzeugs dann liegt vor, wenn die Längsachse des Zugfahrzeugs und die Längsachse des Anhängers identisch ausgerichtet sind.

Gemäß einer weiteren Ausführungsform ist das Steuergerät, welches bei einem Rangieren die individuelle Betätigung der Bremsen des Anhängers steuert, mobil ausgebildet und über eine Leitung oder eine Funkstrecke mit der Steuerungselektronik im Zugfahrzeug verbunden. Hierdurch ist es möglich, bei einem Rangiervorgang die Betätigung der Radbremsen des Anhängers von außerhalb der Fahrerkabine des Zugfahrzeugs durch eine Hilfsperson steuern zu lassen.

Gemäß einer anderen Ausführungsform ist vorgesehen, dass das Steuergerät, welches bei einem Rangieren die individuelle Betätigung der Bremsen des Anhängers steuert, am Zugfahrzeug angeordnet ist. Bei dieser Variante kann vorgesehen sein, dass das Steuergerät mit einem Lenkwinkelsensor sowie mit einem Gangsensor verbunden ist, so dass eine beabsichtigte Rangierfahrt im Vorwärtsgang oder Rückwärtsgang von dem Steuergerät ebenso automatisch ermittelbar ist wie der von Fahrer des Zugfahrzeugs gerade gesteuerte Lenkwinkel. Aus diesen Messwerten kann dann von dem Steuergerät autonom die fahrsituationsoptimale Betätigung von wenigstens einer Radbremse des Anhängers gesteuert werden. Dazu kann das Bremssystem des Anhängers unabhängig von dem Bremssystem des Zugfahrzeugs betätigt werden.

Sofern der Lenkmechanismus des Anhängers als Drehschemellenkung ausgebildet ist, kann dessen Antrieb der in Form eines Drehantriebs direkt am Drehschemel realisiert sein.

Die Erfindung wird nachstehend anhand eines in der beigefügten Zeichnung dargestellten Ausführungsbeispiels weiter erläutert. In der Zeichnung zeigt
Fig. 1 ein Gespannfahrzeug bestehend aus einem zweiachsigen Zugfahrzeug und einem zweiachsigen Anhänger mit einer drehschemelgelagerten lenkbaren Vorderachse im gestreckten Zustand beim Einleiten einer Rückwärtsfahrt mit Abbremsen eines Rades der gelenkten Anhängerachse, bei dem ein Steuergerät zur individuellen Betätigung der Radbremsen des Anhängers außerhalb des Zugfahrzeugs angeordnet ist,
Fig. 2 das Gespannfahrzeug gemäß Fig. 1 nach Zurücklegen eines gewissen Weges und eingeschwenktem Anhänger,
Fig. 3 ein Gespannfahrzeug gemäß Fig. 1 im gestreckten Zustand vor Beginn des Rückwärtsrangierens mit Abbremsung eines Rades an der ungelenkten Hinterachse des Anhängers,
Fig. 4 das Gespannfahrzeug gemäß Fig. 3 nach Zurücklegen eines gewissen Weges und durch Abbremsen eines Rades der ungelenkten Hinterachse bewirkten Einschwenken des Anhängers, und
Fig. 5 das Gespannfahrzeug gemäß Fig. 2, bei dem ein Steuergerät zur individuellen Betätigung der Radbremsen des Anhängers im Zugfahrzeug angeordnet ist.

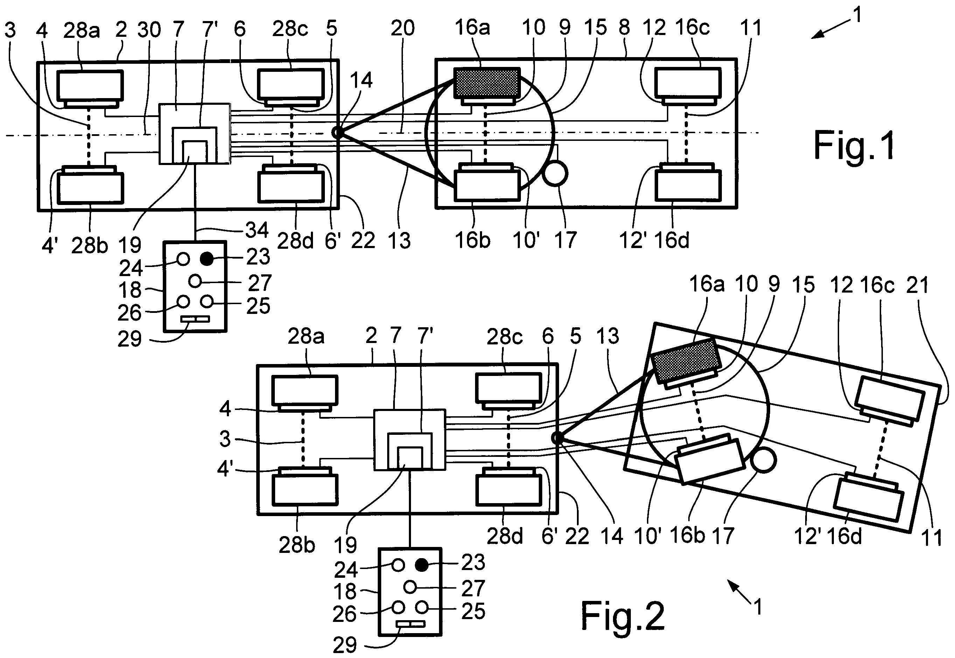

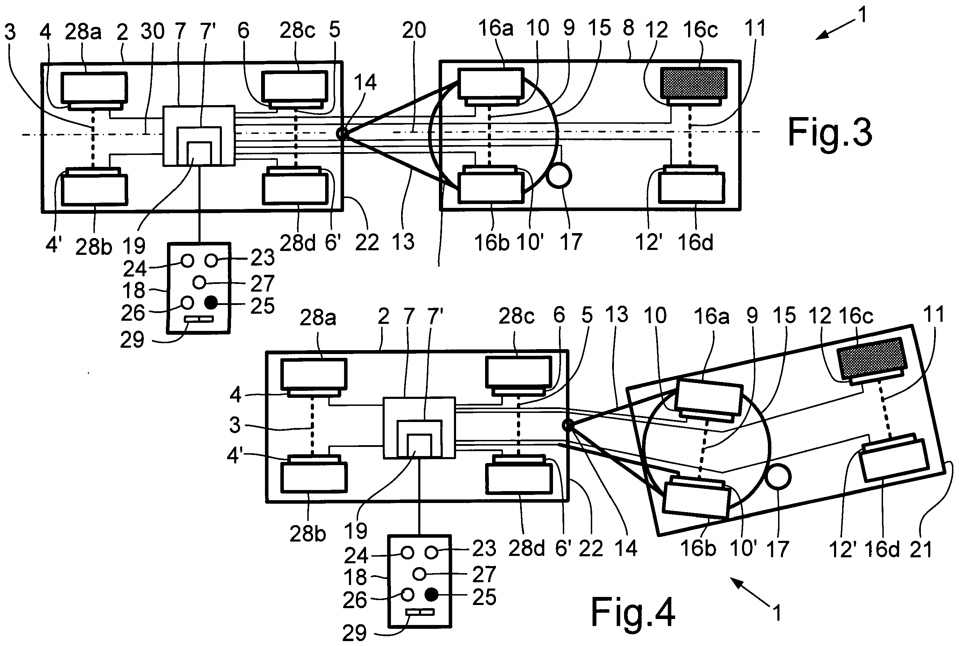

Das in Fig. 1 dargestellte Gespannfahrzeug 1 besteht aus einem Zugfahrzeug 2 mit einer lenkbaren Vorderachse 3 und einer ungelenkten hinteren Antriebsachse 5. Die Räder 28a, 28b der lenkbaren Vorderachse 3 sind mit Bremsen 4, 4' und die Räder 28c, 28d der hinteren Antriebsachse 5 mit Bremsen 6, 6' versehen. Das Zugfahrzeug 2 kann mehr als eine gelenkte Vorderachse und mehr als eine ungelenkte Hinterachse aufweisen. Das Gespannfahrzeug 1 ist in den Figuren 1 und 3 in seiner gestreckten Stellung dargestellt, bei der die Längsachse 30 des Zugfahrzeugs 2 und die Längsachse 20 des Anhängers 8 identisch ausgerichtet sind.

Ein zweiachsiger Anhänger 8 weist eine gelenkte Vorderachse 9 und eine ungelenkte Hinterachse 11 auf, er kann aber auch mehr als nur eine gelenkte Vorderachse und mehr als nur eine ungelenkte Hinterachse aufweisen.

Die Räder 16a, 16b der gelenkten Vorderachse 9 des Anhängers 8 sind mit Bremsen 10, 10' und die Räder 16c, 16d der ungelenkten Hinterachse 11 des Anhängers 8 sind mit Bremsen 12, 12' versehen. Die gelenkte Vorderachse 9 des Anhängers 8 ist mittels eines Drehschemels 15 lenkbar mit dem Aufbau des Anhängers 8 verbunden sowie mittels einer Deichsel 13 an einer Anhängerkupplung 14 am Heck 22 des Zugfahrzeugs 2 angekuppelt.

Das dargestellte Ausführungsbeispiel zeigt ein Gespannfahrzeug 1, das mit einem Radschlupfregelsystem 7' ausgestattet ist. Dieses Radschlupfregelsystem 7' ist Bestandteil einer Steuerungsvorrichtung 7, die am Zugfahrzeug 2 angeordnet ist. Beim Auslenken eines nicht dargestellten Bremspedals der Betriebsbremse des Gesamtfahrzeugs 1 durch den Fahrer gelangt in nicht dargestellter Weise ein Bremssignal an das Radschlupfregelsystem 7', das alle Bremsen 4, 4', 6, 6', 10, 10', 12, 12' bei einer Vorwärtsfahrt derartig hinsichtlich einer Bremsbetätigung ansteuert, dass diese in Bremswirkung geraten und nicht blockieren. Droht das Gespannfahrzeug 1 bei einer Vorwärtsfahrt und bei einer Geradeausfahrt oder bei einer Kurvenfahrt seitlich auszubrechen, so steuert das Radschlupfregelsystem 7' die Bremsen 4, 4', 6, 6', 10, 10', 12, 12', der Räder der Achsen 3, 5, 9, 11 des Zugfahrzeugs 2 und des Anhängers 8 in bekannter Weise derart an, dass das Gespannfahrzeug 1 stabilisiert wird.

Zur Steuerung vorzugsweise des Rückwärtsrangieren ist ein Steuergerät 18 vorhanden, welches funktional mit einer Steuerungselektronik 19 verbunden ist. Diese Verbindung kann mittels einer Steuerungsleitung 34 oder einer nicht gesondert dargestellten Funkstrecke mit Funksende- und Funkempfangseinrichtung realisiert sein.

Die Steuerungselektronik 19 ist in dem in den Figuren gezeigten Ausführungsbeispiel in der Steuerungsvorrichtung 7 integriert. Die Steuerungselektronik 19 ist beim dargestellten Ausführungsbeispiel außerdem in das elektronische Radschlupfregelsystem 7' hardwarebezogen integriert und/oder softwarebezogen implementiert. Die Steuerungselektronik 19 wird nur beim Rückwärtsrangieren des Gespannfahrzeugs 1 aktiviert. Die Steuerungsvorrichtung 7 ist über nicht gesondert bezeichnete Betätigungsdruckleitungen oder elektrische Steuerungsleitungen mit nicht dargestellten Aktuatoren an den Bremsen 4, 4', 6, 6', 10, 10', 12, 12' der Räder des Zugfahrzeugs 2 und des Anhängers 8 verbunden.

Das Steuergerät 18 ist in den Figuren 1 bis 4 mobil ausgebildet und außerhalb des Gespannfahrzeuges 1 angeordnet. Dadurch kann eine Hilfsperson mit diesem Steuergerät 18 außerhalb der Fahrerkabine des Zugfahrzeugs 2 den Rangiervorgang steuern, beispielsweise wenn der Fahrer bei sehr beengter und/oder schlecht einsehbarer rückwärtiger Umgebung beim Rangieren eine Unterstützung braucht. Die Betätigung des Steuergeräts 18 kann aber auch durch den Fahrer des Zugfahrzeugs 2 erfolgen, sofern sich dieses im nicht dargestellten Führerhaus des Zugfahrzeugs 2 befindet.

Das Steuergerät 18 weist einen Betätigungsschalter 23 für die Bremse 10 des rechten Vorderrads 16a des Anhängers 8, einen Betätigungsschalter 24 für die Bremse 10' des linken Vorderrads 16b des Anhängers 8, einen Betätigungsschalter 25 für die Bremse 12 des rechten Hinterrads 16c des Anhängers 8, einen Betätigungsschalter 26 für die Bremse 12' des linken Hinterrads 16d des Anhängers 8 und einen Betätigungsschalter 27 zum Lösen der genannten Bremsen auf.

Wird bei Beginn des Rückwärtsrangierens gemäß Fig. 1 der Betätigungsschalter 23 für die Bremse 10 des rechten Vorderrades 16a des Anhängers 8 betätigt, so bewirkt dies beim Zurücksetzen des Gespannfahrzeugs 1 ein Ausschwenken der gelenkten Vorderachse 9 des Anhängers 8 um den durch dieses rechte Vorderrad 16a gebildeten Drehpunkt, wie in Fig. 2 gezeigt, während dadurch das Heck 21 des Anhängers 8 in die entgegen gesetzte Richtung geschwenkt wird.

Das Ausführungsbeispiel gemäß Fig. 3 zeigt eine Betätigung der Bremse 12 des rechten Rades 16c der ungelenkten Hinterachse 11 des Anhängers 8 durch Betätigung des Betätigungsknopfes 25. Wie in Fig. 4 dargestellt, schwenkt das Heck 21 des Anhängers 8 bei einer Rückwärtsbewegung des Gespannfahrzeugs 1 in diesem Fall um den durch das abgebremste Hinterrad 16c des Anhängers gebildeten Drehpunkt aus.

Aus den Figuren 1 bis 4 ist auch ersichtlich, dass sich das erfindungsgemäße System für das Rückwärtsrangieren eines Gespannfahrzeugs 1 mit einfachen Mitteln realisieren lässt, da nur vorhandene Steuerungsmechanismen, beispielsweise das Radschlupfregelsystem 7, an die manuelle Steuerung durch das Steuergerät 18 anzupassen sind. Das erfindungsgemäße System ist für ein Gespannfahrzeug 1 vorgesehen, welches wie dargestellt aus einem Zugfahrzeug 2 und einem Anhänger 8 mit einer drehschemelgelagerten lenkbaren Vorderachse 9 besteht.

Die Betätigung der Bremsen 10, 10' der Räder 16a, 16b der Vorderachse 9 und der Bremsen 12, 12' der Räder 16c, 16d der Hinterachse 11 des Anhängers 8 lässt sich mittels des Steuergeräts 18 in der Weise kombinieren, dass für ein schnelles Einschwenken des Anhängers 8 ein Vorderrad 16a, wie in Fig. 2 gezeigt, sowie ein Hinterrad 16d auf der anderen Anhängerlängsseite abgebremst wird. Ein schneller Geradeauslauf lässt sich anschließend wieder dadurch erreichen, dass dann das jeweils entgegengesetzte Rad 16b an der Vorderachse 9 und 16c an der Hinterachse 11 des Anhängers 8 abgebremst werden.

Zusätzlich zur Lenkung des Anhängers 8 beim Rückwärtsrangieren durch Abbremsen der Räder 16a, 16b der gelenkten Vorderachse 9 bzw. der Räder 16c, 16d der ungelenkten Hinterachse 11 kann ein Antrieb 17 für die gelenkte Vorderachse 9 in Form eines am Drehschemel 15 angreifenden Drehantriebs vorgesehen sein, der das Schwenken des Aufbaus des Anhängers 8 mit Bezug auf den Drehschemel 15 unterstützt. Dieser Drehantrieb 17 lässt sich ebenfalls durch die Betätigungsvorrichtung 18 aktivieren, sofern diese wie in den Figuren dargestellt mit einem entsprechenden Betätigungsschalter 29 ausgestattet ist und die Steuerungselektronik 19 und/oder die Steuerungsvorrichtung 7 diesbezügliche ausgebildet sowie mit diesem Drehantrieb 17 verbunden ist.

Des Weiteren lässt sich die Steuerungselektronik 19 dazu einrichten, das Rückwärtsrangieren mit gestrecktem Gespannfahrzeug 1 automatisch durchzuführen, indem die entsprechenden Radbremsen 10, 10', 12, 12' der Vorderachse 9 und/oder der Hinterachse 11 des Anhängers 8 so angesteuert werden, dass der Anhänger 8 beim Ausweichen aus der gestreckten Stellung des Gespannfahrzeugs 1 in diese gestreckte Stellung wieder zurückgeführt wird.

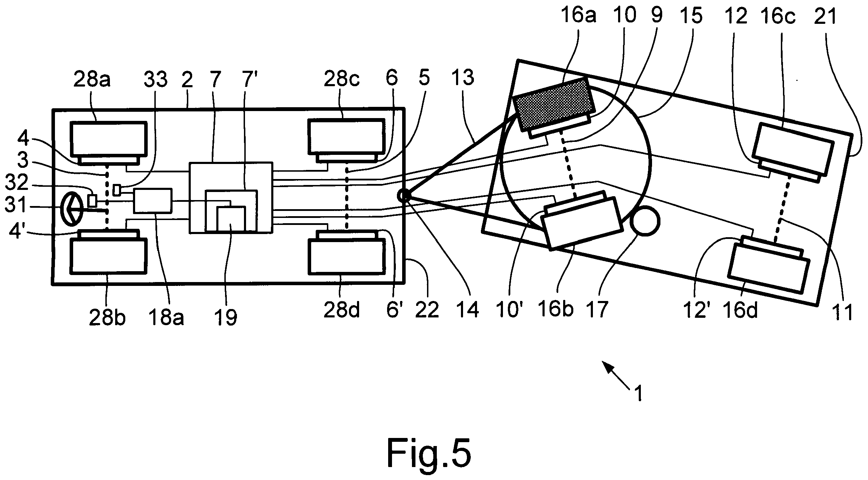

Gemäß Fig. 5 kann das Steuergerät 18a fest am Zugfahrzeug 2 angeordnet sein. Bei dieser Ausführungsform ist das Steuergerät 18a mit einem Lenkwinkelsensor 32 beispielsweise im Bereich des Lenkrades 31 des Zugfahrzeugs 2 und mit einem Gangsensor 33 zur Ermittlung der gewählten Fahrtrichtung (vorwärts oder rückwärts) über zugeordnete Sensorleitungen verbunden. Aufgrund der Informationen von dem Lenkwinkelsensor 32 und dem Gangsensor 33 ist das Steuergerät 18a in der Lage, autonom zu entscheiden, welches der Räder 16a, 16b, 16c, 16d des Anhängers 8 zur Durchführung eines optimalen Rangiervorgangs vorzugsweise bis zum Stillstand abzubremsen ist.

## Patentansprüche

1. Bremssystem für einen Anhänger (8) eines Gespannfahrzeugs (1), der über eine mittels einer Deichsel (13) lenkbare Vorderachse (9) sowie über mindestens eine ungelenkte Hinterachse (11) verfügt, **dadurch gekennzeichnet, dass** das Bremssystem ein Steuergerät (18, 18a) aufweist, welches dazu eingerichtet ist, entsprechend einer von anhängerextern angeforderten Richtungsvorgabe die Bremse (10, 10', 12, 12') wenigstens eines Rades (16a, 16b, 16c, 16d) einer Seite wenigstens einer Achse (9, 11) des Anhängers (8) so abzubremsen, dass der Anhänger (8) bei einem Bewegen desselben in die gewünschte Rangierrichtung bewegt wird.

2. Bremssystem nach Anspruch 1, **dadurch gekennzeichnet, dass** das Steuergerät (18, 18a) dazu eingerichtet ist, wenigstens die Bremse (10, 10') eines Rades (16a, 16b) der wenigstens einen gelenkten Vorderachse (9) und/oder die Bremse (12, 12') wenigstens eines Rades (16c, 16d) der wenigstens einen ungelenkten Hinterachse (11) zu betätigen, um das Heck (21) des Anhängers (8) in eine vorbestimmte Richtung zu steuern.

3. Bremssystem nach Anspruch 1 oder 2, **dadurch gekennzeichnet, dass** das Steuergerät (18, 18a) mit einer Steuerungselektronik (19) in dem Zugfahrzeug (2) des Gespannfahrzeugs (1) funktional verbunden ist, wobei die Steuerungselektronik (19) dazu eingerichtet ist, je nach Fahraufgabe und Bedarf eine Abbremsstrategie auszuwählen und die Abbremsung einzelner Räder (16a, 16b) einer wenigstens einen gelenkten Vorderachse (9) und/oder einzelner Räder (16c, 16d) an der wenigstens einen ungelenkten Hinterachse (11) zu steuern.

4. Bremssystem nach einem der Ansprüche 1 bis 3, **dadurch gekennzeichnet, dass** das Gespannfahrzeug (1) ein elektronisches Radschlupfregelsystem (7') aufweist, und dass die mit dem Steuergerät (18, 18a) funktional verbundene Steuerungselektronik (19) in dieses Radschlupfregelsystem (7') hardwarebezogen integriert und/oder softwarebezogen implementiert ist und nur beim Rückwärtsrangieren des Gespannfahrzeugs (1) aktivierbar ist.

5. Bremssystem nach einem der Ansprüche 1 bis 4, **dadurch gekennzeichnet, dass** die wenigstens eine gelenkte Vorderachse (9) des Anhängers (8) einen Antrieb (17) für einen Lenkmechanismus (15) aufweist, der mittels des Steuergeräts (18, 18a) steuerbar ist.

6. Bremssystem nach einem der Ansprüche 1 bis 5, **dadurch gekennzeichnet, dass** der Lenkmechanismus der Vorderachse (9) des Anhängers (8) aus einem Drehschemel (15) besteht.

7. Bremssystem nach einem der Ansprüche 1 bis 6, **dadurch gekennzeichnet, dass** die Steuerungselektronik (19) dazu eingerichtet ist, das Rückwärtsrangieren mit gestrecktem Gespannfahrzeug (1) automatisch durchzuführen, indem die entsprechenden Radbremsen (10, 10', 12, 12') der Vorderachse (9) und/oder der Hinterachse (11) des Anhängers (8) so angesteuert werden, dass der Anhänger (8) bei einem Ausweichen aus seiner gestreckten Stellung in diese gestreckte Stellung zurückgeführt wird.

8. Bremssystem nach einem der Ansprüche 1 bis 7, **dadurch gekennzeichnet, dass** das Steuergerät (18) mobil ausgebildet und über eine Leitung (34) oder eine Funkstrecke mit der Steuerungselektronik (19) im Zugfahrzeug (2) verbunden ist.

9. Bremssystem nach einem der Ansprüche 1 bis 7, **dadurch gekennzeichnet, dass** das Steuergerät (18) im Zugfahrzeug (2) angeordnet ist, und mit einem Lenkwinkelsensor (32) sowie mit einem Gangsensor (33) verbunden ist.

## Claims

1. Brake system for a trailer (8) of a vehicle combination (1), which trailer has a front axle (9), which is steerable by means of a drawbar (13), and at least one non-steered rear axle (11), **characterized in that** the brake system has a control unit (18, 18a) which is configured to, in a manner dependent on a directional specification demanded from a source external to the trailer, brake the brake (10, 10', 12, 12') of at least one wheel (16a, 16b, 16c, 16d) of one side of at least one axle (9, 11) of the trailer (8) such that the trailer (8) is moved in the desired manoeuvring direction during a movement thereof.

2. Brake system according to Claim 1, **characterized in that** the control unit (18, 18a) is configured to actuate at least the brake (10, 10') of a wheel (16a, 16b) of the at least one steered front axle (9) and/or the brake (12, 12') of at least one wheel (16c, 16d) of the at least one non-steered rear axle (11) in order to steer the rear end (21) of the trailer (8) in a predetermined direction.

3. Brake system according to Claim 1 or 2, **characterized in that** the control unit (18, 18a) is functionally connected to control electronics (19) in the tractor vehicle (2) of the vehicle combination (1), wherein the control electronics (19) are configured to, in a manner dependent on driving task and requirement, select a braking strategy and control the braking of individual wheels (16a, 16b) of an at least one steered front axle (9) and/or of individual wheels (16c, 16d) at the at least one non-steered rear axle (11).

4. Brake system according to any of Claims 1 to 3, **characterized in that** the vehicle combination (1) has an electronic wheel slip control system (7'), and **in that** the control electronics (19) functionally connected to the control unit (18, 18a) are integrated in terms of hardware, and/or implemented in terms of software, in said wheel slip control system (7') and are activatable only during reverse manoeuvring of the vehicle combination (1).

5. Brake system according to any of Claims 1 to 4, **characterized in that** the at least one steered front axle (9) of the trailer (8) has a drive (17) for a steering mechanism (15), which is controllable by means of the control unit (18, 18a).

6. Brake system according to any of Claims 1 to 5, **characterized in that** the steering mechanism of the front axle (9) of the trailer (8) is composed of a fifthwheel (15).

7. Brake system according to any of Claims 1 to 6, **characterized in that** the control electronics (19) are configured to automatically perform the reverse manoeuvring with straightened vehicle combination (1) by virtue of the corresponding wheel brakes (10, 10', 12, 12') of the front axle (9) and/or the rear axle (11) of the trailer (8) being activated such that the trailer (8), in the event of a departure from its straightened position, is returned into said straightened position.

8. Brake system according to any of Claims 1 to 7, **characterized in that** the control unit (18) is of mobile form and is connected via a line (34) or a radio path to the control electronics (19) in the tractor vehicle (2).

9. Brake system according to any of Claims 1 to 7, **characterized in that** the control unit (18) is arranged in the tractor vehicle (2), and is connected to a steering angle sensor (32) and to a gear ratio sensor (33) .

## Revendications

1. Système de freinage pour une remorque (8) d'un véhicule attelé (1), qui est dotée d'un essieu avant (5) orientable au moyen d'une barre d'attelage (13) ainsi que d'au moins un essieu arrière non orienté (11), **caractérisé en ce que** le système de freinage présente un appareil de commande (18, 18a), qui est conçu pour actionner, suivant une instruction de direction demandée de l'extérieur de la remorque, le frein (10, 10', 12, 12') d'au moins une roue (16a, 16b, 16c, 16d) d'un côté d'au moins un essieu (9, 11) de la remorque (8), de telle manière que la remorque (8), lors d'un déplacement de celle-ci, soit déplacée dans la direction de manœuvre désirée.

2. Système de freinage selon la revendication 1, **caractérisé en ce que** l'appareil de commande (18, 18a) est conçu pour actionner au moins le frein (10, 10') d'une roue (16a, 16b) dudit au moins un essieu avant orienté (9) et/ou le frein (12, 12') d'au moins une roue (16c, 16d) dudit au moins un essieu arrière non orienté (11), afin de commander l'arrière (21) de la remorque (8) dans une direction prédéterminée.

3. Système de freinage selon une revendication 1 ou 2, **caractérisé en ce que** l'appareil de commande (18, 18a) est fonctionnellement relié à une électronique de commande (19) dans le véhicule tracteur (2) du véhicule attelé (1), dans lequel l'électronique de commande (19) est conçue pour sélectionner une stratégie de freinage selon l'instruction de roulage et selon les besoins et pour commander le freinage de roues individuelles (16a, 16b) d'au moins un essieu avant orienté (9) et/ou de roues individuelles (16c, 16d) dudit au moins un essieu arrière non orienté (11).

4. Système de freinage selon l'une quelconque des revendications 1 à 3, **caractérisé en ce que** le véhicule attelé (1) présente un système électronique de réglage du patinage des roues (7'), et **en ce que** l'électronique de commande (19) fonctionnellement reliée à l'appareil de commande (18, 18a) est intégrée au niveau du matériel dans ce système de réglage du patinage des roues (7') et/ou est mise œuvre au niveau du logiciel et n'est activable que lors d'une manœuvre en marche arrière du véhicule attelé (1).

5. Système de freinage selon l'une quelconque des revendications 1 à 4, **caractérisé en ce que** ledit au moins un essieu avant orienté (9) de la remorque (8) présente un entraînement (17) pour un mécanisme de direction (15), qui peut être commandé au moyen de l'appareil de commande (18, 18a).

6. Système de freinage selon l'une quelconque des revendications 1 à 5, **caractérisé en ce que** le mécanisme de direction de l'essieu avant (9) de la remorque (8) se compose d'une sellette rotative (15).

7. Système de freinage selon l'une quelconque des revendications 1 à 6, **caractérisé en ce que** l'électronique de commande (19) est conçue pour exécuter automatiquement la manœuvre en marche arrière avec le véhicule attelé étendu (1), par le fait que l'on commande les freins de roue correspondants (10, 10', 12, 12') de l'essieu avant (9) et/ou de l'essieu arrière (11) de la remorque (8), de telle manière que la remorque (8) soit ramenée dans cette position étendue en cas d'écart hors de sa position étendue.

8. Système de freinage selon l'une quelconque des revendications 1 à 7, **caractérisé en ce que** l'appareil de commande (18) est mobile et est relié par une ligne (34) ou une liaison radio à l'électronique de commande (19) dans le véhicule tracteur (2).

9. Système de freinage selon l'une quelconque des revendications 1 à 7, **caractérisé en ce que** l'appareil de commande (18) est disposé dans le véhicule tracteur (2), et est relié à un détecteur d'angle de braquage (32) ainsi qu'à un détecteur de course (33).
